# FASCICULE DE BREVET EUROPEEN

(11) **EP 1 951 509 B1**
(45) Date de publication et mention de la délivrance du brevet: **23.08.2017**
(21) Numéro de dépôt: 06831245.3
(22) Date de dépôt: 28.09.2006
(51) Int. Cl.: B32B 5/18, B32B 5/28, B32B 5/06, B29C 70/08, B29C 70/24, B29C 70/48, B29C 44/12, B32B 7/08, B29C 44/56

(54) **PIECE COMPOSITE INCORPORANT UN COMPLEXE DE RENFORCEMENT MECANIQUE, ET PROCEDE DE FABRICATION D'UNE TELLE PIECE**
VERBUNDTEIL ENTHALTEND EINEN MECHANISCH VERSTÄRKENDEN KOMPLEX UND VERFAHREN ZUR HERSTELLUNG EINES VERBUNDTEILS
COMPOSITE PART INCORPORATING A MECHANICALLY REINFORCING COMPLEX AND METHOD OF PRODUCING SUCH PART

(30) Priorité: 29.09.2005 FR 0552960
(43) Date de publication de la demande: 06.08.2008
(73) Titulaire: Chomarat Textiles Industries, 07160 Le Cheylard (FR)
(72) Inventeur: SANIAL, Philippe, F-07240 Vernoux en Vivarais (FR); SERILLON, Michel, F-07160 Mariac (FR)
(74) Mandataire: Cabinet Laurent & Charras
(86) Numéro de dépôt international: PCT/FR2006/050958
(87) Numéro de publication internationale: WO 2007/039696

(56) Documents cités:
- WO-A-97/10950
- DE-A1- 3 932 726
- DE-A1- 10 253 100
- DE-C1- 4 241 516
- FR-A- 2 149 427
- FR-A- 2 330 535
- US-A- 3 532 588
- US-A- 5 112 663

## Description

### Domaine Technique

L'invention se rattache au domaine des textiles techniques, et plus particulièrement des textiles destinés à être utilisés en tant que renforts pour la fabrication de pièces composites. Elle vise plus particulièrement un complexe de renforcement mécanique, utilisé dans le cadre de procédés permettant la réalisation de pièces épaisses, comportant un noyau à base de résine injectée.

L'invention concerne plus spécifiquement la constitution particulière d'un tel complexe, permettant d'améliorer les propriétés mécaniques de la pièce composite, et notamment en termes de résistance au délaminage, grâce à un procédé également original.

### Techniques antérieures

De façon générale, les pièces composites sont utilisées dans de multiples applications. Elles sont appréciées pour leurs qualités de résistance mécanique alliée à une densité très faible. A titre d'exemple, on peut citer la réalisation de divers panneaux utilisés dans le domaine des constructions de véhicules maritimes ou automobiles, par exemple pour réaliser des parties de coques de bateaux, ou bien encore des parois de hayons de remorques de camions.

De telles pièces incluent donc fréquemment la combinaison d'un noyau présentant une épaisseur relativement forte, sur lequel est disposée une structure textile de renfort, qui est généralement imprégnée d'une résine mécanisante thermodurcissable. En pratique, la construction d'une telle pièce nécessite dans un premier temps la réalisation du noyau. Ce noyau est fréquemment réalisé à base d'une résine de polyuréthane, appréciée pour ses propriétés mécaniques, alliée à une densité relativement faible, de l'ordre de 30 à 70 kg/m³. Ce noyau est ensuite poncé pour lui donner sa forme définitive, puis recouvert sur sa face extérieure d'une structure textile de renfort, typiquement à base de fibres de haute ténacité, tel que le verre, le carbone ou l'aramide.

Cette structure de renfort textile est ensuite imprégnée d'une résine mécanisante, tel que notamment les résines de polyesters insaturés couramment appelés "UP" pour "unsaturated polyester", ou les résines époxy. Après polymérisation, cette résine qui vient imprégner à coeur la structure textile, confère donc une rigidité supplémentaire à la pièce composite. On conçoit que l'enchaînement de ces différentes étapes nécessite des opérations de manipulation délicate, de sorte qu'il est souhaitable d'éliminer l'opération de collage du renfort sur le noyau.

Une solution couramment employée consiste à réaliser l'injection de la mousse de polyuréthane formant le noyau, à l'intérieur d'un moule dont une des faces a préalablement reçu la structure textile de renfort. Toutefois, un problème se pose lors de l'injection de la résine de polyuréthane, puisque cette dernière, qui est injectée sous pression, a tendance à pénétrer dans la structure textile de renfort. Cette dernière ne peut donc plus être imprégnée par la résine mécanisante thermodurcissable, au détriment donc des propriétés mécaniques de la pièce composite.

Pour résoudre ce problème, le Demandeur a proposé dans le document EP 1 365 055, d'utiliser des structures de renforcement qui comportent une couche en matériau élastomérique, associée à une structure textile. Cette couche élastomérique assure un effet de barrière, et empêche la pénétration de la mousse de polyuréthane à l'intérieur de la structure de renfort textile, qui conserve donc ses capacités à être imprégnée par la résine mécanisante thermodurcissable. Toutefois, cette solution présente certains inconvénients en termes de résistance mécanique. En effet, la présence d'une couche barrière étanche constitue une région de discontinuité mécanique, qui forme donc une zone de fragilisation dans laquelle les risques de délamination peuvent être importants.

Une autre solution a également été proposée pour éviter les opérations de ponçage d'un noyau préalablement réalisé. Ainsi, il est décrit dans le document FR-2 149 427, un procédé consistant à utiliser un complexe associant un renfort textile avec une couche de mousse imprégnée d'une résine mécanisante. Ce complexe est mis en place dans le moule, avec la couche de mousse formant réservoir à résine mécanisante orienté vers l'intérieur du futur noyau. Après injection des composants réagissant pour donner la résine du noyau, l'expansion de cette résine provoque un écrasement de la couche de mousse imprégnée. Ce phénomène de compression de la mousse chasse la résine mécanisante qui imprégnait la mousse, et par voie de conséquence, imprègne le renfort textile au contact des parois du moule. Ce procédé, même s'il présente l'avantage de limiter le nombre d'opérations et de manipulation, présente cependant des inconvénients importants en termes de rigidité de la pièce finale. En effet, lors de leur mise en place dans le moule, le renfort textile et la couche de mousse imprégnée de résine sont indépendants, et leurs zones d'interface demeurent, après migration de la résine, une région où les risques de délamination sont importants. Il en va de même de la zone d'interface entre la résine du noyau et la couche de mousse imprégnée de la résine mécanisante.

Les mêmes problèmes s'observent avec le procédé décrit dans le document US-5 112 663, dans lequel la mousse chargée de résine mécanisante est essorée par la pression exercée lors de la fermeture du moule, entre le couvercle du moule et le noyau préalablement réalisé. On notera en outre que ces phénomènes de migration et de diffusion de la résine par dépression mécanique ne permettent pas de garantir une parfaite homogénéité de la concentration de résine sur toute la surface de la pièce composite.

L'un des objectifs de l'invention est de permettre la réalisation de pièces composites renforcées en limitant les étapes de manipulation.

Un autre objectif de l'invention est d'améliorer la résistance à la délamination de pièces composites incorporant des structures textiles de renforcement, et destinées à être imprégnées avec une résine mécanisante.

### Exposé de l'invention

L'invention concerne donc un complexe de renforcement mécanique. Un tel complexe est destiné à être incorporé dans une pièce composite à base de résine injectée. Ce complexe comporte de manière connue une structure textile de renfort, qui est destinée à être imprégnée d'une résine mécanisante thermodurcissable, par exemple à base de résine de polyester insaturé ou époxy.

Conformément à l'invention, ce complexe de renforcement se caractérise en ce qu'il comporte une couche de mousse à cellules ouvertes, présente sur la face interne du complexe, c'est-à-dire la face destinée à venir au contact de la mousse injectée.

Autrement dit, le complexe de renforcement inclut une couche de mousse qui présente une certaine perméabilité à la mousse injectée, qui constituera le noyau de la pièce composte. Grâce à cette perméabilité contrôlée, le complexe de renforcement se trouve intimement associé au noyau lors de la fabrication de ce dernier. En effet, la mousse injectée du noyau pénètre la couche de mousse lors de l'injection, et assure un ancrage de cette dernière, et donc du complexe de renforcement, par rapport au noyau. En d'autres termes, le noyau, lors de sa formation, pénètre partiellement à l'intérieur du complexe de renforcement, et plus précisément de la couche de mousse caractéristique.

Cette mousse caractéristique est sélectionnée pour présenter une porosité optimisée vis-à-vis de la résine du noyau. Cette porosité est en effet choisie pour assurer une pénétration limitée de cette résine d'injection, afin d'empêcher cette dernière d'imprégner la structure textile qui est destinée à recevoir ultérieurement la résine mécanisante. Le degré de pénétration de la résine du noyau à l'intérieur de la couche de mousse peut être déterminé en fonction de l'épaisseur de cette couche de mousse, ainsi que de la nature chimique des différents composants utilisés pour former cette résine d'injection. On prendra notamment en compte la viscosité de chacun des composants intervenant pour réaliser cette résine, étant entendu que la viscosité de ces composants est relativement réduite au départ de la réaction qui conduira à la formation du noyau, mais que cette viscosité augmente relativement rapidement dès que la réaction entre ces différents composants s'amorce. La perméabilité limitée de la couche de mousse est donc prépondérante dans les premiers instants de la réaction d'injection de la mousse destinée à former le noyau.

En fonction des applications souhaitées, la structure textile de renfort du complexe peut être réalisée de différentes manières.

Cette structure textile peut être réalisée notamment sous forme d'une nappe fibreuse, à base de fibres de verre, de carbone ou d'aramide, prises isolément ou en combinaison. Ces fibres peuvent être organisées sous la forme d'un tissu uni ou multidirectionnel, ou bien encore sous la forme d'un mat présentant des propriétés quasi isotropes.

La structure textile de renfort peut également être constituée d'un assemblage de plusieurs nappes fibreuses, combinées pour assurer une optimisation de l'imprégnation par la résine mécanisante thermodurcissable. Il peut par exemple s'agir d'une structure textile telle que commercialisée sous la marque ROVICORE par le Demandeur.

La solidarisation entre la couche de mousse caractéristique et la structure textile de renfort peut être réalisée de différentes manières. Ainsi, et de façon préférentielle, la structure textile et la couche de mousse peuvent être solidarisées par couture/tricotage, c'est-à-dire par une liaison mécanique grâce à des fils de liage qui traversent la couche de mousse et la structure textile. Un tel type de solidarisation permet notamment d'assurer une bonne cohésion entre les deux composants du complexe, et limite très fortement les risques de délaminage.

Toutefois, la solidarisation entre la couche de mousse et la structure textile peut être réalisée par d'autres manières. On peut citer notamment une liaison par aiguilletage, par laquelle certaines fibres de la structure fibreuse de renforcement sont déplacées pour pénétrer la couche de mousse caractéristique. On peut également solidariser ces deux couches par un collage, en recherchant toutefois à ce que ce collage ne soit pas étanche, de manière à éviter la création d'une zone de brusques changements des propriétés mécaniques, source de fragilisation. Ce collage peut donc être obtenu de manière non uniforme, par la présence d'un film adhésif ajouré, ou bien encore par la répartition de points de collage. Ces points de collage doivent être suffisamment proches pour fermement solidariser la structure textile de renfort et la couche de mousse, mais ils ne doivent pas être trop proches pour faciliter le fluage des différentes résines, et éviter la création de zones d'accumulation.

En pratique, la couche de mousse caractéristique sera choisie pour ses propriétés de compatibilité avec la résine d'injection. Ainsi, dans le cas préférentiel de l'injection d'un noyau à base de polyuréthane, la mousse ainsi que ses caractéristiques sera également choisie du même matériau.

Avantageusement, dans certaines circonstances, il est possible d'intégrer dans le complexe, un film interposé entre la couche de mousse et la couche de renfort. Un tel film assure ainsi une certaine étanchéité entre la mousse à cellules ouvertes et le renfort textile dans le cas où la pénétration du noyau serait trop importante, et en particulier à proximité des points d'injection. On évite ainsi que la mousse du noyau ne vienne se mêler à la résine mécanisante du renfort.. Ce film est avantageusement en un matériau qui se dégradé ou se dissout lors des réactions d'injection de la résine mécanisante. On pourra choisir en particulier un matériau qui est dégradé par le styrène fréquemment présent dans les résines mécanisantes. Il est préférable en effet que ce film se délite, pour disparaître au moins en partie, et ne plus rester à l'état de film dans la pièce finale, pour ne pas provoquer l'apparition de zones de fragilisation préjudiciables à la solidité de la pièce composite. Ce délitement est facilité par le fait que ce film soit perforé par le fil de couture liant les couches du complexe. Ce délitement peut être encore amélioré dans le cas où le film présente des préperforations spécifiques, s'ajoutant aux perforations effectuées par les fils de couture.

En pratique, le complexe conforme à l'invention peut être utilisé selon un procédé avantageux, puisqu'il permet de s'affranchir d'opérations de ponçage d'un noyau préalablement réalisé.

Ainsi, un tel procédé comporte les étapes suivantes :
- la mise en place dans un moule d'un complexe comportant la structure de renfort textile associée à une mousse à cellules ouvertes ;
- l'injection dans le moule des composants réagissant pour donner une résine formant le noyau, et venant au contact de la couche de mousse ;
- l'imprégnation de la couche de renfort par injection de la résine mécanisante.

Autrement dit, contrairement aux procédés de l'art antérieur dans lesquels le noyau est préalablement fabriqué, puis poncé pour avoir un état de surface permettant l'accroche du renfort, le procédé conforme à l'invention réalise l'accrochage du renfort directement pendant l'injection de la résine du noyau. C'est par la pénétration partielle de cette résine du noyau dans la couche de mousse à cellules ouvertes que l'ancrage du renfort s'effectue, puisque ce dernier est mécaniquement solidaire de cette couche de mousse à cellules ouvertes.

En pratique, l'injection de la résine mécanisante dans ce renfort textile peut avoir lieu dans le même moule, directement après injection des composants formant la mousse du noyau.

Il est également possible de réaliser cette injection de la résine mécanisante dans un moule différent de celui dans lequel a été formé le noyau. Ainsi, dans cette configuration, on sépare les étapes de réalisation du noyau avec accrochage du renfort, de l'étape d'injection et de durcissement de la résine mécanisante au sein du renfort. Dans le cas où ces deux opérations s'effectuent dans des conditions opératoires de durée et de température différentes, il est ainsi possible d'optimiser le processus de fabrication.

Dans certains cas, il est également possible, entre la formation du noyau et l'injection de la résine mécanisante, d'ouvrir le moule pour la mise en place de couches complémentaires au dessus de la couche de renfort. De telles couches complémentaires peuvent être des couches d'aspect, tel que des couches de résine de polyester du type Gelcoat, des couches de renfort supplémentaires, ou des inserts en matière plastique ou métalliques.

Les pièces composites réalisées dans le procédé peuvent facilement être identifiées, dans la mesure où la résine du noyau pénètre partiellement dans la couche de mousse à cellules ouvertes du complexe de renforcement mécanique.

En pratique, l'invention permet donc de réaliser des pièces dont le complexe de renforcement est solidarisé au noyau directement lors de l'opération d'injection de ce noyau. Dans certains cas, le complexe de renforcement peut également être agencé sous forme de découpe préformée, ou encore sous forme d'une découpe cousue pour former un sac à l'intérieur de laquelle est injectée la mousse du noyau, avec un maintien en forme à l'intérieur d'un moule le cas échéant.

### Description sommaire des figures

La manière de réaliser l'invention, ainsi que les avantages qui en découlent, ressortiront bien de la description des modes de réalisation qui suivent, à l'appui des figures annexées dans lesquelles :
- la Figure 1 est une vue en perspective sommaire d'une pièce composite intégrant le complexe conforme à l'invention, montré de manière partiellement arraché ;
- la Figure 2 est une vue en coupe de la pièce de la figure 1 ;
- la Figure 3 est une vue en coupe d'un complexe réalisé selon une variante d'exécution ;
- les Figures 4 à 8 sont des vues en coupe de moule dans lesquels sont mises en oeuvre les étapes du procédé de l'invention.

### Manière de réaliser l'invention

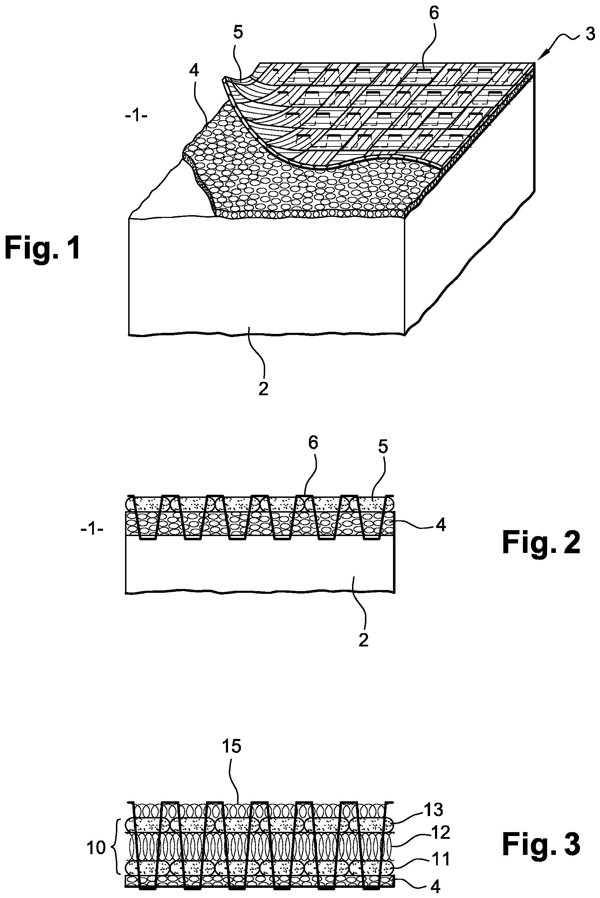

La figure 1 illustre une pièce composite (1), incluant un noyau (2) associé au complexe de renforcement (3).

Conformément à l'invention, ce complexe de renforcement (3) se compose d'une couche de mousse à cellules ouvertes (4), associée avec une structure textile de renforcement (5). La couche de mousse (4) et la structure textile de renforcement (5) sont associées par couture/tricotage au moyen de fils de liage (6).

Bien que n'étant pas limitée à ce type d'application particulière, l'invention présente un avantage lors de la réalisation de pièces composites incluant un noyau (2) réalisé par injection de composants réagissant pour former une mousse de polyuréthane. Dans ce cas, la mousse formant la couche caractéristique (4) venant au contact de ce noyau (2) sera également préférentiellement à base de polyuréthane.

L'épaisseur de la couche de mousse (4) peut être variable, et déterminée en fonction du matériau utilisé pour former le noyau (2), notamment de leur viscosité. Cette épaisseur peut typiquement aller de 1 à 10 mm. De même, la densité de la mousse (4) peut être variable, et induire le taux de pénétration de la résine d'injection du noyau. Cette densité peut être typiquement comprise entre 20 et 250 g/l. En pratique, la taille et la forme des cellules employées peuvent être adaptées au procédé et à la matrice utilisée.

A titre d'exemple, le complexe (3) illustré aux figures 1 et 2 peut se composer d'une couche de mousse de polyuréthane d'une densité de 30 kg/m³, et une épaisseur de 3 mm, donc une masse surfacique de 90 g/m².

Le complexe de l'invention comporte également une couche de renfort (5) qui, dans l'exemple illustré aux figures 1 et 2, est un tissu bidirectionnel à base de fils de haute ténacité et typiquement des fils de verre. De multiples variantes de réalisation au niveau de cette couche de renfort (5) peuvent être réalisées, nomment en utilisant des renforts unidirectionnels, ou bien encore des mats de fibres de verre.

A titre d'exemple, la couche de mousse évoquée précédemment peut être combinée avec un mat de fibres de verre, en utilisant des fibres d'une longueur moyenne de 50 mm pour former un mat d'une masse de 300 g/m². Ce mat peut être solidarisé par couture/tricotage au moyen de fils synthétiques notamment.

Dans la forme illustrée à la figure 3, la structure textile de renfort (10) peut être constituée de l'assemblage de plusieurs couches. Ainsi, deux couches de renfort à proprement parler (11,13) peuvent être séparées par une couche intermédiaire (12) réalisée à base de fils synthétiques présentant une certaine frisure, et autorisant donc le fluage de la résine mécanisante thermodurcissable. La couche de renfort (13) peut recevoir sur sa face externe un voile d'aspect (15). Ce voile permet de donner à l'ensemble un état de surface plus uniforme, et de masquer les ondulations dues à la texture du renfort (13). Ce voile d'aspect (15) peut être solidarisé au complexe par couture, comme illustré à la figure 3. Il peut également être associé de différentes manières, et par exemple par collage ou aiguilletage.

Dans une forme non représentée, le complexe conforme à l'invention peut comprendre un film interposé entre la couche de mousse à cellules ouvertes et le renfort textile. Un tel film permet d'empêcher une migration trop importante de la mousse du noyau à travers la mousse à cellules ouvertes, migration qui viendrait pénétrer la couche de renfort textile. Un tel film peut être de nature très variée, dans la mesure où il présente une certaine compatibilité chimique avec les différents matériaux des résines susceptibles de venir à son contact. On a obtenu de bons résultats en utilisant des films de polyuréthane, typiquement de quelques dizaines de microns d'épaisseur. Ce film est pris en sandwich entre les différents éléments du complexe, et maintenu par rapport à ces derniers grâce au fil de couture qui le traverse. La finesse des trous de couture et la présence du fil de couture ne perturbent pas l'étanchéité de ce film outre mesure, et facilite son délitement par les composants de la résine mécanisante.

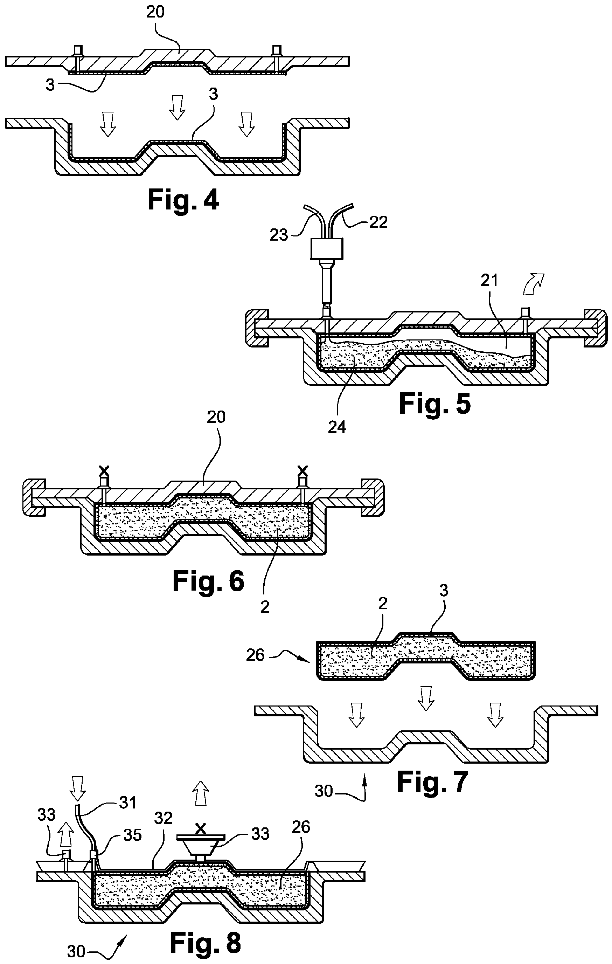

Le renfort conforme à l'invention peut être utilisé selon le procédé décrit aux figures 4 à 8.

Ainsi, dans une première étape, le complexe (3) conforme à l'invention est mis en place dans un moule (20), pour en habiller les parois. La mise en place peut par exemple s'effectuer par l'intermédiaire d'une couche d'un matériau adhésif pulvérisé sur les parois du moule (20). Après habillage du moule (20), ce dernier est fermé pour délimiter un espace clos (21) à l'intérieur duquel sont injectés, comme illustré à la figure 5, les composants chimiques (22,23) du type polyol et isocyanate qui, réagissant l'un avec l'autre, vont former la mousse de polyuréthane (24) constituant le matériau du noyau de la future pièce. Au cours de cette réaction, une expansion a lieu, qui emplit intégralement l'espace interne (21), tel qu'illustré à la figure 6. Lorsqu'il vient au contact de la couche de mousse à cellules ouvertes (4) du complexe de renforcement (3), la mousse de polyuréthane du noyau (2) pénètre partiellement dans cette couche, et assure donc un ancrage efficace du complexe sur le noyau.

Par la suite, il est possible de réaliser une seconde étape d'injection, permettant de faire pénétrer dans le moule (20) la résine mécanisante qui imprégnera le renfort textile (5) du complexe caractéristique.

Toutefois, dans la variante illustrée à la figure 7, le noyau (2) associé au complexe (3) peut être extrait du moule. Cet ensemble (26) se manipule facilement dans la mesure où le renfort (5) est fermement ancré au noyau (2) grâce à sa couche (4) de mousse à cellules ouvertes. Cet ensemble peut ainsi, comme illustré à la figure 8, être mis en place dans un moule (30) dédié à l'injection de la résine mécanisante, typiquement à base de polyester, qui est injectée selon des conditions opératoires spécifiques. Ainsi, le moule pour cette injection peut comporter un couvercle (32) formé d'une membrane souple, permettant l'application d'une dépression (33) permettant de faire diffuser la résine à partir d'un nombre de points d'injection réduit.

L'ouverture du moule (20) et l'éventuel transfert de la pièce (26) qu'il contient vers un autre moule, permet de libérer partiellement les contraintes mécaniques imposées sur le textile de renfort (5), et en particulier de faciliter la diffusion ultérieure de la résine mécanisante. Il est également possible, en fonction des applications, de déposer des couches supplémentaires, en particulier de « Gelcoat » sur le renfort textile (5), avant injection de la résine mécanisante (31).

Il ressort de ce qui précède que le complexe conforme à l'invention présente de multiples avantages, et notamment celui de pouvoir réaliser des pièces injectées renforcées en une seule étape avant imprégnation du renfort, et ce en conservant des hautes propriétés de résistance au délaminage par poinçonnage.

## Revendications

1. Pièce composite (1) incluant un noyau à base de résine injectée (2), et incorporant un complexe de renforcement mécanique (3), ledit complexe comportant une structure textile de renfort (5), imprégnée d'une résine mécanisante thermodurcissable, **caractérisée** en que le complexe de renforcement comporte une couche de mousse (4) à cellules ouvertes, présente sur la face interne du complexe (3), venant au contact de la résine du noyau injecté (2) dans laquelle la résine du noyau est présente partiellement dans l'épaisseur de la couche (4) de mousse à cellules ouvertes du complexe de renforcement mécanique.

2. Pièce composite selon la revendication 1, **caractérisée en ce que** la structure textile de renfort est une nappe fibreuse (5).

3. Pièce composite selon la revendication 1, **caractérisée en ce que** la structure textile de renfort (10) est un assemblage de plusieurs nappes fibreuses (11-13).

4. Pièce composite selon l'une des revendications 2 ou 3, **caractérisée en ce que** la nappe fibreuse (5) est à base de fibres de verre, de carbone ou d'aramide, prises isolément ou en combinaison.

5. Pièce composite selon la revendication 1, **caractérisée en ce que** la couche de mousse (4) et la structure textile de renfort (5) sont solidarisées par couture/tricotage.

6. Pièce composite selon la revendication 1, **caractérisée en ce que** la couche de mousse et la structure textile de renfort sont solidarisées par aiguilletage.

7. Pièce composite selon la revendication 1, **caractérisée en ce que** la couche de mousse et la structure textile de renfort sont solidarisées par collage non uniforme.

8. Pièce composite selon la revendication 1, **caractérisée en ce que** la couche de mousse est à base de polyuréthane.

9. Pièce composite selon la revendication 1, **caractérisée en ce qu'**il comporte un film interposé entre la couche de mousse à cellules ouvertes et la couche à structure textile de renfort.

10. Procédé de fabrication d'une pièce composite, incluant un noyau à base de résine injectée associé à une structure de renfort imprégnée d'une résine mécanisante thermodurcisssante, **caractérisé en ce qu'**il comporte les étapes suivantes :
- la mise en place dans un moule (20) d'un complexe (3) comportant la structure de renfort textile (5) associée à une couche (4) de mousse à cellules ouvertes ;
- l'injection dans le moule des composants (22,23) réagissant pour donner une résine (24) formant le noyau (2), et venant au contact de la couche (4) de mousse à cellules ouvertes du complexe (3) ;
- l'imprégnation de la structure de renfort textile (5) par injection d'une résine mécanisante (31).

11. Procédé selon la revendication 10, **caractérisé en ce que** l'injection de la résine mécanisante (31) a lieu dans le moule où ont été injectés les composants formant la résine du noyau.

12. Procédé selon la revendication 10, **caractérisé en ce que** l'injection de la résine mécanisante (31) a lieu dans un moule différent (30) de celui (28) dans lequel a été formé le noyau.

13. Procédé selon la revendication 10, **caractérisé en ce qu'**entre la formation du noyau et l'injection de la résine mécanisante, le moule est ouvert pour la mise en place de couches complémentaires au dessus de la structure de renfort.

## Patentansprüche

1. Verbundteil (1), umfassend einen Kern, auf Basis von eingespritztem Harz (2), das einen mechanisch verstärkenden Komplex (3) enthält, wobei dieser Komplex eine textile Verstärkungsstruktur (5) beinhaltet, die mit einem mechanische Eigenschaften verleihenden, wärmehärtenden Harz imprägniert ist, **dadurch gekennzeichnet, dass** der verstärkende komplex (3) auf seiner Innenseite eine Schicht aus offenzelligem Schaumstoff (4) umfasst, die dazu bestimmt ist, mit dem Harz des eingespritzten Kerns (2) in Kontakt zu kommen, in der das Harz des Kerns teilweise in der Dicke der offenzelligen Schaumstoffschicht (4) des mechanischen verstärkenden komplexes vorhanden ist.

2. Verbundteil gemäß Anspruch 1, **dadurch gekennzeichnet, dass** die textile Verstärkungsstruktur eine Fasermatte (5) ist.

3. Verbundteil gemäß Anspruch 1, **dadurch gekennzeichnet, dass** die textile Verstärkungsstruktur (10) eine Verbindung mehrerer Fasermatten (11-13) ist.

4. Verbundteil gemäß Anspruch 2 oder 3, **dadurch gekennzeichnet, dass** die Fasermatte (5) auf Basis von Glas-, Karbon- oder Aramidfasern, alleine oder in Verbindung, hergestellt wurde.

5. Verbundteil gemäß Anspruch 1, **dadurch gekennzeichnet, dass** die Schaumstoffschicht (4) und die textile Verstärkungsstruktur (5) durch Nähen/ Stricken miteinander verbunden sind.

6. Verbundteil gemäß Anspruch 1, **dadurch gekennzeichnet, dass** die Schaumstoffschicht und die textile Verstärkungsstruktur durch Vernadelung miteinander verbunden sind.

7. Verbundteil gemäß Anspruch 1, **dadurch gekennzeichnet, dass** die Schaumstoffschicht und die textile Verstärkungsstruktur durch ungleichmäßiges Verkleben miteinander verbunden sind.

8. Verbundteil gemäß Anspruch 1, **dadurch gekennzeichnet, dass** die Schaumstoffschicht auf Polyurethanbasis handelt.

9. Verbundteil gemäß Anspruch 1, **dadurch gekennzeichnet, dass** sich zwischen der offenzelligen Schaumstoffschicht und der textilen Verstärkungsstruktur eine Folie befindet.

10. Verfahren zur Herstellung eines Verbundteils, umfassend einen Kern, auf Basis von eingespritztem Harz zusammen mit einer mit einem mechanische Eigenschaften verleihenden, wärmehärtenden Harz imprägnierten Verstärkungsstruktur (5), **dadurch gekennzeichnet, dass** es die folgenden Schritte umfasst:
- die Bereitstellung, in einer Form (20), eines Komplexes (3), der die textile Verstärkungsstruktur (5), verbunden mit einer offenzelligen Schaumstoffschicht (4) umfasst;
- Einspritzen der Bestandteile (22, 23) in die Form, die miteinander reagieren und das Harz (24) ergeben, das den Kern (2) bildet, und in Kontakt mit der offenzelligen Schaumstoffschicht (4) des Komplexes (3) kommt;
- Imprägnierung der textilen Verstärkungsstruktur (5) durch Einspritzen eines mechanische Eigenschaften verleihenden Harzes (31).

11. Verfahren nach Anspruch 10, **dadurch gekennzeichnet, dass** das Einspritzen des mechanische Eigenschaften verleihenden Harzes (31) in die Form erfolgt, in die die Bestandteile, die das Harz des Kerns bilden, gespritzt wurden.

12. Verfahren nach Anspruch 10, **dadurch gekennzeichnet, dass** das Einspritzen des mechanische Eigenschaften verleihenden Harzes (31) in eine andere Form (20) erfolgt, als die (28), in der der Kern gebildet wurde.

13. Verfahren nach Anspruch 10, **dadurch gekennzeichnet, dass** zwischen der Bildung des Kerns und dem Einspritzen des mechanische Eigenschaften verleihenden Harzes die Form zum Einbringen zusätzlicher Schichten über der Verstärkungsstruktur geöffnet wird.

## Claims

1. Composite part (1) including a resin based core (2), and incorporating mechanically reinforcing complex (3), said complex comprising a reinforcing textile structure (5), impregnated with a thermoset resin conferring mechanical properties, **characterized in that** the reinforcing complex comprises a layer of open-cell foam (4), present on the inner face of the complex (3), coming into contact with the resin of the injected core (2), where the resin of the core is partially present in the thickness of the layer of open-cell foam of the mechanicalkly reinforcing complex.

2. Composite part according to Claim 1, **characterized in that** the reinforcing textile structure is a fibrous layer (5).

3. Composite part according to Claim 1, **characterized in that** the reinforcing textile structure (10) is an assembly of a plurality of fibrous layers (11-13).

4. Composite part according to either of Claims 2 and 3, **characterized in that** the fibrous layer (5) is based on glass, carbon or aramid fibres, separate or combined.

5. Composite part according to Claim 1, **characterized in that** the foam layer (4) and the reinforcing textile structure (5) are joined by stitching/knitting.

6. Composite part according to Claim 1, **characterized in that** the foam layer and the reinforcing textile structure are joined by needling.

7. Composite part according to Claim 1, **characterized in that** the foam layer and the reinforcing textile structure are joined by non-uniform bonding.

8. Composite part according to Claim 1, **characterized in that** the foam layer is based on polyurethane.

9. Composite part according to Claim 1, **characterized in that** it comprises a film inserted between the open cell foam layer and the reinforcing textile structure layer.

10. Method for fabricating a composite part, including an injected resin based core combined with a reinforcing structure impregnated with a thermoset resin conferring mechanical properties (mechanizing), **characterized in that** it comprises the following steps:
- placement in a mould (20) of a complex (3) comprising the textile reinforcing structure (5) combined with an open cell foam layer (4);
- injection into the mould of the components (22,23) reacting to produce a resin (24) forming the core (2) and coming into contact with the open cell foam layer (4) of the complex (3);
- impregnation of the textile reinforcing structure (5) by injecting a mechanizing resin (31).

11. Method according to Claim 10, **characterized in that** the injection of the mechanizing resin (31) takes place in the mould into which the components forming the resin of the core have been injected.

12. Method according to Claim 10, **characterized in that** the injection of the mechanizing resin (31) takes place in a different mould (30) from the mould (28) in which the core has been formed.

13. Method according to Claim 10, **characterized in that** between the formation of the core and the injection of the mechanizing resin, the mould is opened for placing supplementary layers above the reinforcing structure.
